# EUROPEAN PATENT SPECIFICATION

(11) **EP 1 259 742 B1**
(45) Date of publication and mention of the grant of the patent: **04.05.2005**
(21) Application number: 01986526.0
(22) Date of filing: 07.12.2001
(51) Int. Cl.: B60G 15/12, F16F 5/00

(54) **COMPRESSIBLE FLUID STRUT**
FEDERBEIN MIT KOMPRIMIERBAREM FLUIDUM
AMORTISSEUR A FLUIDE COMPRESSIBLE

(30) Priority: 07.12.2000 US 251951 P
(43) Date of publication of application: 27.11.2002
(73) Proprietor: Visteon Global Technologies, Inc., Dearborn, Michigan 48126 (US)
(72) Inventor: COOMBS, Joshua, Whitmore Lake, MI 48189 (US); EDMONDSON, Jeremy, Canton, MI 48188 (US)
(74) Representative: McLean, Robert Andreas
(86) International application number: PCT/US2001/048141
(87) International publication number: WO 2002/045980

(56) References cited:
- US-A- 2 828 960
- US-A- 3 603 576
- US-A- 3 627 348
- US-A- 4 441 593
- US-A- 5 522 481
- US-A- 5 577 579

## Description

### Technical Field

The subject matter of this invention generally relates to suspension struts for a vehicle and, more particularly, to suspension struts including a compressible fluid.

### Background of the Invention

In the typical vehicle, a combination of a coil spring and a gas strut function to allow compression movement of a wheel toward the vehicle and rebound movement of the wheel toward the ground. The suspension struts attempt to provide isolation of the vehicle from the roughness of the road and resistance to the roll of the vehicle during a turn. More specifically, the typical coil spring provides a suspending spring force that biases the wheel toward the ground and the typical gas strut provides a damping force that dampens both the suspending spring force and any impact force imparted by the road. Inherent in every conventional suspension strut is a compromise between ride (the ability to isolate the vehicle from the road surface) and handling (the ability to resist roll of the vehicle). Vehicles are typically engineered for maximum road isolation (found in the luxury market) or for maximum roll resistance (found in the sport car market).

There is a need, however, for an improved suspension strut that avoids this inherent compromise.

An example of a prior art suspension strut is disclosed in patent document US 3,603,576. This suspension strut has the features of the preamble of Claim 1.

Prior art patent document US 2,828,960 discloses the use of a compressible silicone fluid in a suspension strut.

Prior art patent document US 3,627,348 discloses a self-levelling suspension strut having an integral electric pump.

### Summary of the Invention

According to the invention, there is provided a suspension strut for a vehicle having a wheel contacting a surface under the vehicle and a suspension link suspending a wheel from the vehicle and allowing compression movement of the wheel toward the vehicle and rebound movement of the wheel toward the surface, said suspension strut comprising:
a compressible fluid;
a hydraulic tube and displacement rod adapted to couple the suspension link and the vehicle, said hydraulic tube defining an inner cavity adapted to contain a portion of said compressible fluid and to cooperate with said compressible fluid to supply a suspending spring force that biases the wheel toward the surface, said displacement rod being adapted to move into said inner cavity upon the compression movement of the wheel and to move out of said inner cavity upon the rebound movement of the wheel;
a cavity piston coupled to said displacement rod and extending to said hydraulic tube thereby separating said inner cavity into a first section and a second section, said cavity piston defining a first orifice adapted to allow flow of said compressible fluid between said first section and said second section of said inner cavity; and
a first variable restrictor coupled to said cavity piston and adapted to variably restrict the passage of said compressible fluid through said first orifice based on the velocity of said cavity piston relative to said hydraulic tube, wherein said cavity piston, said first orifice, and said first variable restrictor cooperate to supply a rebound damping force during the rebound movement of the wheel;
a pressure vessel defining an outer cavity located between said pressure vessel and said hydraulic tube and adapted to contain a portion of said compressible fluid, wherein said hydraulic tube defines a tube opening adapted to fluidly connect said first section of said inner cavity and said outer cavity, and wherein said pressure vessel and said tube opening cooperate with said hydraulic tube and said compressible fluid to supply the suspending spring force;
characterized in that said suspension strut further comprises a controllable valve adapted to selectively restrict passage of said compressible fluid between said first section of said inner cavity and said outer cavity.

### Brief Description of the Drawings

The invention will now be described by way of example with reference to the accompanying drawings, in which:
Figure 1 is a front view of a first suspension strut, shown within a vehicle;
Figure 2 is a cross-sectional view of the suspension strut of Figure 1;
Figure 3 is a cross-sectional view of a second suspension strut; and
Figure 4 is a cross-sectional view of a suspension strut of a preferred embodiment of the invention.

### Detailed Description of the Invention

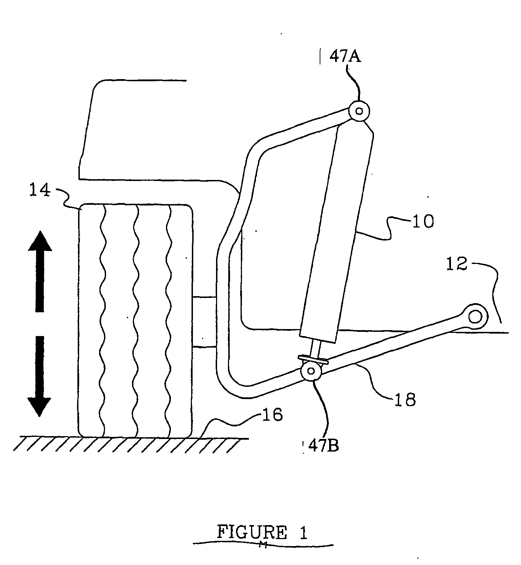

As shown in Figure 1, the first suspension strut 10 has been specifically designed for a vehicle 12 having a wheel 14 contacting a surface 16 under the vehicle 12 and a suspension link 18 suspending the wheel 14 from the vehicle 12. The suspension link 18 allows compression movement of the wheel 14 toward the vehicle 12 and rebound movement of the wheel 14 toward the surface 16. Despite its design for a particular environment, the suspension strut 10 may be used in any suitable environment.

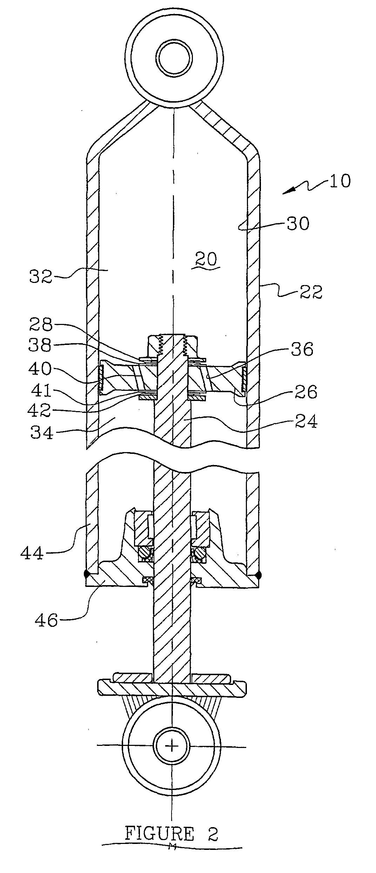

As shown in Figure 2, the first suspension strut 10 includes a compressible fluid 20, a hydraulic tube 22 and displacement rod 24, a cavity piston 26, and a first variable restrictor 28. The hydraulic tube 22 and the compressible fluid 20 cooperate to supply a suspending spring force that biases the wheel toward the surface, while the cavity piston 26 and the first variable restrictor 28 cooperate to supply a rebound damping force that dampens the suspending spring force. The suspension strut 10, of course, may include other components or systems that do not substantially interfere with the functions and purposes of these components.

The compressible fluid 20 of the first suspension strut 10, which cooperates to supply the suspending spring force, is preferably a silicon fluid that compresses about 1.5% volume at 2,000 psi (13.8 MPa), about 3% volume at 5,000 psi (34.5 MPa), and about 6% volume at 10,000 psi (69.0 MPa). Above 2,000 psi (13.8 MPa), the compressible fluid 20 has a larger compressibility than conventional hydraulic oil. The compressible fluid 20, however, may alternatively be any suitable fluid, with or without a silicon component that provides a larger compressibility above 2,000 psi (13.8 MPa) than conventional hydraulic oil.

The hydraulic tube 22 and displacement rod 24 of the first suspension strut 10 cooperatively function to couple the suspension link and the vehicle and to allow compression movement of the wheel toward the vehicle and rebound movement of the wheel toward the surface. The hydraulic tube 22 defines an inner cavity 30, which functions to contain a portion of the compressible fluid 20. As previously mentioned, the inner cavity 30 and the compressible fluid 20 cooperate to supply the suspending spring force that biases the wheel toward the surface, and essentially suspends the entire vehicle above the surface. The displacement rod 24 is adapted to move into the inner cavity 30 upon the compression movement of the wheel and to move out of the inner cavity 30 upon the rebound movement of the wheel. As it moves into the inner cavity 30, the displacement rod 24 displaces, and thereby compresses, the compressible fluid 20. In this manner, the movement of the displacement rod 24 into the inner cavity 30 increases the suspending spring force of the suspension strut 10. As the displacement rod 24 moves out of the inner cavity 30, the compressible fluid 20 decompresses and the suspending spring force of the suspension strut 10 decreases. The displacement rod 24 is preferably cylindrically shaped and, because of this preference, the displacement of the displacement rod 24 within the inner cavity 30 and the magnitude of the suspending spring force have a linear relationship. If a linear relationship is not preferred for the particular application of the suspension strut 10, or if there is any other appropriate reason, the displacement rod 24 may be alternatively designed with another suitable shape. The hydraulic tube 22 and the displacement rod 24 are preferably made from conventional steel and with conventional methods, but may alternatively be made from any suitable material and with any suitable method.

The cavity piston 26 of the first suspension strut 10 is coupled to the displacement rod 24 and extends to the hydraulic tube 22. In this manner, the cavity piston 26 separates the inner cavity 30 into a first section 32 and a second section 34. The cavity piston 26 defines a first orifice 36, which extends between the first section 32 and the second section 34 of the inner cavity 30. The first orifice 36 functions to allow flow of the compressible fluid 20 between the first section 32 and the second section 34 of the inner cavity 30. The cavity piston 26 is preferably securely mounted to the displacement rod 24 by a conventional fastener, but may alternatively integrally formed with the displacement rod 24 or securely mounted with any suitable device. The cavity piston 26 is preferably made from conventional materials and with conventional methods, but may alternatively be made from other suitable materials and with other suitable methods.

The first variable restrictor 28 of the first suspension strut 10 is coupled to the cavity piston 26 near the first orifice 36. The first variable restrictor 28 functions to restrict the passage of the compressible fluid 20 through the first orifice 36 and, more specifically, functions to variably restrict the passage based on the velocity of the cavity piston 26 relative to the hydraulic tube 22. In the first suspension strut 10, the first variable restrictor 28 is a first shim stack 38 preferably made from conventional materials and with conventional methods. In alternative embodiments, the first variable restrictor 28 may include any other suitable device able to variably restrict the passage of the compressible fluid 20 through the first orifice 36 based on the velocity of the cavity piston 26 relative to the hydraulic tube 22.

In the first suspension strut 10, the cavity piston 26 also defines a second orifice 40, which - like the first orifice 36 - preferably extends between the first section 32 and the second section 34 of the inner cavity 30 and functions to allow flow of the compressible fluid 20 between the first section 32 and the second section 34 of the inner cavity 30. Further, the suspension strut 10 also includes a second variable restrictor 41 coupled to the cavity piston 26 near the second orifice 40. The second variable restrictor 41 - like the first variable restrictor 28 - functions to restrict the passage of the compressible fluid 20 through the second orifice 40 and, more specifically, functions to variably restrict the passage based on the velocity of the cavity piston 26 relative to the hydraulic tube 22.

In the first suspension strut 10, the second variable restrictor 41 is a second shim stack 42 preferably made from conventional materials and with conventional methods. In alternative embodiments, the second variable restrictor may include any suitable device able to variably restrict a passage of the compressible fluid 20 through the second orifice 40 based on the velocity of the cavity piston 26 relative to the hydraulic tube 22.

The cavity piston 26, the first orifice 36, and the first variable restrictor 28 of the first suspension strut 10 cooperate to supply the rebound damping force during the rebound movement of the wheel. The rebound damping force acts to dampen the suspending spring force that tends to push the displacement rod 24 out of the hydraulic tube 22. The cavity piston 26, the second orifice 40, and a second variable restrictor 41, on the other hand, cooperate to supply the compression damping force during the compression movement of the wheel. The compression damping force acts to dampen any impact force that tends to push the displacement rod 24 into the hydraulic tube 22.

The hydraulic tube 22 of the first suspension strut 10 includes a first portion 44 and a second portion 46, which aids in the assembly of the suspension strut 10. During the assembly, the second portion 46 of the hydraulic tube 22 is slid over the displacement rod 24 and the cavity piston 26 is mounted to the displacement rod 24, preferably with a fastener. Then, the cavity piston 26 is slid into the first portion 44 of the hydraulic tube 22 and the second portion 46 of the hydraulic tube 22 is fastened to the first portion 44, preferably with a weld. The suspension strut 10 also includes bearings and seals between the sliding elements of the suspension strut 10.

As shown in Figures 1 and 2, the first suspension strut 10 also includes a first connector 47A and a second connector 47B. The connectors 47A and 47B are made from a structural material that firmly mounts the suspension strut 10 to the vehicle 12 without any substantial compliancy. In this manner, the suspension strut 10 provides all of the isolation between the vehicle 12 and the suspension link 18. In alternative embodiments, either the first connector 47A, the second connector 47B, or both connectors 47A and 47B may include elastic material that connects the suspension strut 10 to the vehicle 12 with some compliancy. In this manner, the suspension strut 10 and the connectors 47A and 47B act in a series to provide the isolation between the vehicle 12 and the suspension link 18. The connectors 47A and 47B are preferably made with conventional materials and from conventional methods, but may alternatively be made with any suitable material and from any suitable method.

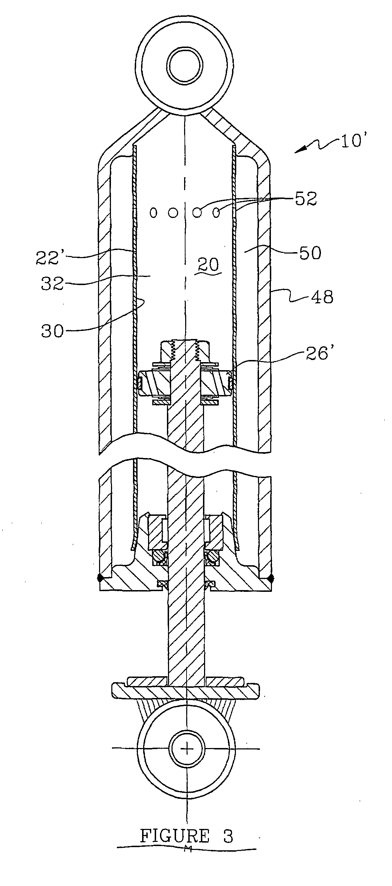

As shown in Figure 3, in addition to the components of the first suspension strut 10, the second suspension strut 10' includes a pressure vessel 48. The pressure vessel 48 cooperates with a modified hydraulic tube 22' to define an outer cavity 50 located between hydraulic tube 22' and the pressure vessel 48. The hydraulic tube 22' defines a tube opening 52, which functions to fluidly connect the first section 32 of the inner cavity 30 and the outer cavity 50. Effectively, the presence of the tube opening 52 within the hydraulic tube 22 and the pressure vessel 48 around the hydraulic tube 22' greatly expands the volume of compressible fluid 20 on the "compression side" of the cavity piston 26'. In this manner, the size of the hydraulic tube 22' and the size of the pressure vessel 48 may be adjusted to optimize the suspending spring force of the suspension strut 10'. In an alternative embodiment, the hydraulic tube 22' may define a tube opening to fluidly connect the second section 34 of the inner cavity 30 and the outer cavity 50 which would greatly expand the volume of compressible fluid 20 on the "rebound side" of the cavity piston 26'. In all other aspects, the second suspension strut 10' is similar to the first suspension strut 10.

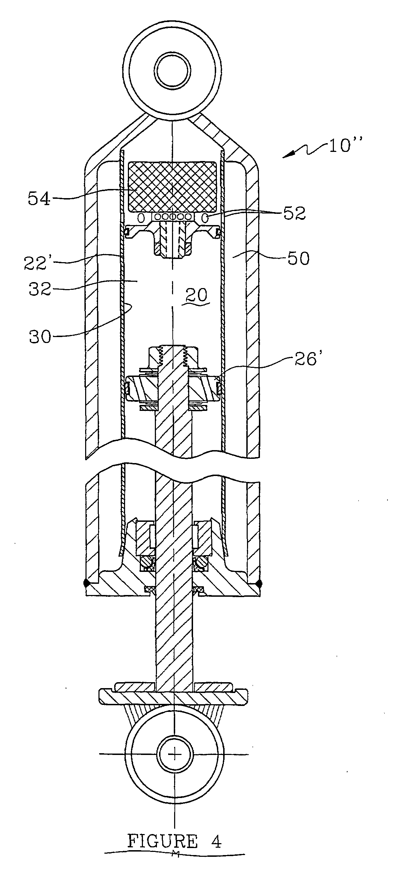

As shown in Figure 4, in addition to the components of the second suspension strut 10', the suspension strut 10'' of the preferred embodiment of the invention includes a controllable valve 54 near the tube opening 52 of the hydraulic tube 22'. The controllable valve 54 functions to selectively restrict passage of the compressible fluid 20 between the first section 32 of the inner cavity 30 and the outer cavity 50. The presence or absence of the connection between the first section 32 of the inner cavity 30 and the outer cavity 50 dramatically affects the suspending spring force of the suspension strut 10''.

The suspension strut 10" of the preferred embodiment of the invention also preferably includes an electric control unit (not shown) coupled to the controllable valve 54. The electric control unit functions to selectively activate the controllable valve 54. Because selective activation of the controllable valve 54 dramatically affects volume of the compressible fluid 20 on the "compression side" of the cavity piston 26', the electric control unit can actively modulate the suspending spring force, the rebound damping force, and the compression damping force to achieve the desired ride and handling for the vehicle. For example, as the vehicle encounters a harsh impact force, or a fast turn, the electric control unit may close the controllable valve 54 thereby decreasing the volume of the compressible fluid 20 on the "compression side" of the cavity piston 26'. This response may achieve the desired ride and handling for the vehicle. Both the controllable valve 54 and the electric control unit are preferably conventional devices, but may alternatively be any suitable device to selectively restrict the passage of compressible fluid.

As any person skilled in the art of suspension struts will recognize from the previous description and from the figures and claims, modifications and changes can be made to the preferred embodiment of the invention without departing from the scope of the claims.

## Claims

1. A suspension strut (10") for a vehicle (12) having a wheel contacting a surface (16) under the vehicle and a suspension link (18) suspending a wheel (14) from the vehicle (12) and allowing compression movement of the wheel (14) toward the vehicle (12) and rebound movement of the wheel (14) toward the surface (16), said suspension strut (10") comprising:
a compressible fluid (20);
a hydraulic tube (22') and displacement rod (24) adapted to couple the suspension link (18) and the vehicle (12), said hydraulic tube (22') defining an inner cavity (30) adapted to contain a portion of said compressible fluid (20) and to cooperate with said compressible fluid to supply a suspending spring force that biases the wheel (14) toward the surface (16), said displacement rod (24) being adapted to move into said inner cavity (30) upon the compression movement of the wheel (14) and to move out of said inner cavity (30) upon the rebound movement of the wheel (14);
a cavity piston (26') coupled to said displacement rod (24) and extending to said hydraulic tube (22') thereby separating said inner cavity (30) into a first section (32) and a second section (34), said cavity piston (26') defining a first orifice (36) adapted to allow flow of said compressible fluid (20) between said first section (32) and said second section (34) of said inner cavity (22'); and
a first variable restrictor (28) coupled to said cavity piston (26') and adapted to variably restrict the passage of said compressible fluid (20) through said first orifice (36) based on the velocity of said cavity piston (26') relative to said hydraulic tube (22'), wherein said cavity piston (26'), said first orifice (36), and said first variable restrictor (28) cooperate to supply a rebound damping force during the rebound movement of the wheel (14);
a pressure vessel (48) defining an outer cavity (50) located between said pressure vessel and said hydraulic tube (22') and adapted to contain a portion of said compressible fluid (20), wherein said hydraulic tube (22') defines a tube opening (52) adapted to fluidly connect said first section (32) of said inner cavity (30) and said outer cavity (50), and wherein said pressure vessel (48) and said tube opening (52) cooperate with said hydraulic tube (22') and said compressible fluid (20) to supply the suspending spring force;
**characterized in that** said suspension strut (10") further comprises a controllable valve (54) adapted to selectively restrict passage of said compressible fluid (20) through said tube opening (52) between said first section (32) of said inner cavity (30) and said outer cavity (50).

2. The suspension strut (10") of Claim 1, wherein said compressible fluid includes a silicone fluid (20).

3. The suspension strut (10") of Claim 1, wherein said compressible fluid (20) has a larger compressibility above 2,000 psi (13.8 MPa) than hydraulic oil.

4. The suspension strut (10") of Claim 1, wherein said compressible fluid (20) is adapted to compress about 1.5% volume at 2,000 psi (13.8 MPa), about 3% volume at 5,000 psi (34.5 MPa), and about 6% volume at 10,000 psi (69.0 MPa).

5. The suspension strut (10") of any preceding claim, wherein said first variable restrictor (28) is a first shim stack (38).

6. The suspension strut (10") of any preceding claim, wherein said cavity piston (26) defines a second orifice (40) adapted to allow passage of said compressible fluid (20) between said first section (32) and said second section (34) of said inner cavity (30).

7. The suspension strut (10") of Claim 6, further comprising a second variable restrictor (41) coupled to said cavity piston (26) and adapted to variably restrict the passage of said compressible fluid (20) through said second orifice (40) based on the velocity of said cavity piston (26) relative to said hydraulic tube (22').

8. The suspension strut (10") of Claim 7, wherein said cavity piston (26), said second orifice (40), and said second variable restrictor (41) cooperate to supply a compression damping force during the compression movement of the wheel (14).

9. The suspension strut (10") of Claim 8, wherein said second variable restrictor (41) is a second shim stack (42).

10. The suspension strut (10") of any preceding claim, further comprising an electric control unit adapted to selectively activate said controllable valve (54), thereby actively modulating the suspending spring force.

11. The suspension strut (10") of Claim 10, wherein said electric control unit is further adapted to selectively actuate said controllable valve (54), thereby actively modulating the rebound damping force.

12. The suspension strut (10") of Claim 10, wherein said electric control unit is further adapted to selectively actuate said controllable valve (54), thereby actively modulating the compression damping force.

13. The suspension strut (10") of any preceding claim, further comprising a connector (47A,47B) adapted to pivotally mount said suspension strut (10") to the vehicle without substantial compliancy.

## Patentansprüche

1. Federbein (10") für ein Fahrzeug (12), das ein Rad aufweist, das mit einer Fläche (16) unter dem Fahrzeug in Kontakt ist, und eine Aufhängungsstrebe (18), die ein Rad (14) am Fahrzeug (12) aufhängt und die Kompressionsbewegung des Rads (14) zum Fahrzeug (12) hin und die Rückfederungsbewegung des Rads (14) zur Fläche (16) hin erlaubt, wobei dieses Federbein (10") umfaßt:
ein komprimierbares Fluid (20);
ein Hydraulikrohr (22') und eine Verdrängungsstange (24), die geeignet sind, die Aufhängungsstrebe (18) und das Fahrzeug (12) zu koppeln, wobei dieses Hydraulikrohr (22') einen inneren Hohlraum (30) definiert, der geeignet ist, einen Teil des komprimierbaren Fluids (20) zu enthalten und mit dem komprimierbaren Fluid zusammenzuwirken, um eine Aufhängefederkraft zu erzeugen, die das Rad (14) zur Fläche (16) hin vorspannt, wobei die Verdrängungsstange (24) geeignet ist, sich bei der Kompressionsbewegung des Rads (14) in den inneren Hohlraum (30) hinein zu bewegen, und sich bei der Rückfederungsbewegung des Rads (14) aus dem inneren Hohlraum (30) heraus zu bewegen;
einen Hohlraumkolben (26'), der mit der Verdrängungsstange (24) gekoppelt ist und im Hydraulikrohr (22') verläuft, wodurch der innere Hohlraum (30) in einen ersten Abschnitt (32) und einen zweiten Abschnitt (34) getrennt wird, wobei dieser Hohlraumkolben (26') eine erste Öffnung (36) definiert, die geeignet ist, den Durchfluß des komprimierbaren Fluids (20) zwischen dem ersten Abschnitt (32) und dem zweiten Abschnitt (34) des inneren Hohlraums (22') zuzulassen; und
eine erste variable Drossel (28), die mit dem Hohlraumkolben (26') gekoppelt ist und geeignet ist, den Durchfluß des komprimierbaren Fluids (20) durch die erste Öffnung (36) auf der Basis der Geschwindigkeit des Hohlraumkolbens (26') relativ zum Hydraulikrohr (22') auf variable Weise zu beschränken, wobei der Hohlraumkolben (26'), die erste Öffnung (36) und diese erste variable Drossel (28) zusammenwirken, um während der Rückfederungsbewegung des Rads (14) eine Rückfederungsdämpfungskraft zu erzeugen;
einen Druckbehälter (48), der einen äußeren Hohlraum (50) definiert, der zwischen diesem Druckbehälter und dem Hydraulikrohr (22') angeordnet ist und geeignet ist, einen Teil des komprimierbaren Fluids (20) zu enthalten, wobei das Hydraulikrohr (22') eine Rohröffnung (52) definiert, die geeignet ist, zwischen dem ersten Abschnitt (32) des inneren Hohlraums (30) und dem äußeren Hohlraum (50) eine Fluidverbindung herzustellen, und wobei der Druckbehälter (48) und die Rohröffnung (52) mit dem Hydraulikrohr (22') und dem komprimierbaren Fluid (20) zusammenwirken, um die Aufhängefederkraft zu erzeugen;
**dadurch gekennzeichnet, daß** das Federbein (10") außerdem ein regelbares Ventil (54) umfaßt, das geeignet ist, den Durchfluß des komprimierbaren Fluids (20) durch die Rohröffnung (52) zwischen dem ersten Abschnitt (32) des inneren Hohlraums (30) und dem äußeren Hohlraum (50) auf selektive Weise zu beschränken.

2. Federbein (10") nach Anspruch 1, wobei das komprimierbare Fluid eine Silikonflüssigkeit (20) umfaßt.

3. Federbein (10") nach Anspruch 1, wobei das komprimierbare Fluid (20) oberhalb von 2.000 psi (13,8 MPa) eine größere Komprimierbarkeit als Hydrauliköl aufweist.

4. Federbein (10") nach Anspruch 1, wobei das komprimierbare Fluid (20) geeignet ist, bei 2.000 psi (13,8 MPa) etwa 1,5% Volumen, bei 5.000 psi (34,5 MPa) etwa 3% Volumen und bei 10.000 psi (69,0 MPa) etwa 6% Volumen zu komprimieren.

5. Federbein (10") nach jedem der obigen Ansprüche, wobei die erste variable Drossel (28) ein erster Abstandsscheibenstapel (38) ist.

6. Federbein (10") nach jedem der obigen Ansprüche, wobei der Hohlraumkolben (26) eine zweite Öffnung (40) definiert, die geeignet ist, den Durchfluß des komprimierbaren Fluids (20) zwischen dem ersten Abschnitt (32) und dem zweiten Abschnitt (34) des inneren Hohlraums (30) zu erlauben.

7. Federbein (10") nach Anspruch 6, außerdem umfassend eine zweite variable Drossel (41), die mit dem Hohlraumkolben (26) gekoppelt ist und geeignet ist, den Durchfluß des komprimierbaren Fluids (20) durch die zweite Öffnung (40) auf der Basis der Geschwindigkeit des Hohlraumkolbens (26) relativ zum Hydraulikrohr (22') auf variable Weise zu beschränken.

8. Federbein (10") nach Anspruch 7, wobei der Hohlraumkolben (26), die zweite Öffnung (40) und die zweite variable Drossel (41) zusammenwirken, um während der Kompressionsbewegung des Rads (14) eine Kompressionsdämpfungskraft zu erzeugen.

9. Federbein (10") nach Anspruch 8, wobei die zweite variable Drossel (41) ein zweiter Abstandsscheibenstapel (42) ist.

10. Federbein (10") nach jedem der obigen Ansprüche, außerdem umfassend eine elektrische Steuereinheit, die geeignet ist, das regelbare Ventil (54) auf selektive Weise zu aktivieren, um dadurch die Aufhängefederkraft aktiv zu modulieren.

11. Federbein (10") nach Anspruch 10, wobei die elektrische Steuereinheit außerdem geeignet ist, das regelbare Ventil (54) auf selektive Weise zu betätigen, um dadurch die Rückfederungsdämpfungskraft aktiv zu modulieren.

12. Federbein (10") nach Anspruch 10, wobei die elektrische Steuereinheit außerdem geeignet ist, das regelbare Ventil (54) auf selektive Weise zu betätigen, um dadurch die Kompressionsdämpfungskraft aktiv zu modulieren.

13. Federbein (10") nach jedem der obigen Ansprüche, außerdem umfassend ein Verbindungsstück (47A, 47B), das geeignet ist, das Federbein (10") ohne wesentliche Nachgiebigkeit auf drehbare Weise am Fahrzeug zu befestigen.

## Revendications

1. Une jambe de suspension (10") pour un véhicule (12) possédant une roue au contact d'une surface (16) sous le véhicule et un étrier de suspension (18) suspendant une roue (14) du véhicule (12), permettant un mouvement de compression de la roue (14) vers le véhicule (12) ainsi qu'un mouvement de rebond de la roue (14) vers la surface (16), ladite jambe de suspension (10") comprenant :
un fluide compressible (20) ;
un tube hydraulique (22') et une bielle de déplacement (24) adaptés pour coupler l'étrier de suspension (18) avec le véhicule (12), ledit tube hydraulique (22') définissant une cavité interne (30) adaptée pour contenir une portion dudit fluide compressible (20) et pour coopérer avec ledit fluide compressible pour fournir une force de suspension élastique qui force la roue (14) vers la surface (16), ladite bielle de déplacement (24) étant adaptée pour se déplacer vers l'intérieur de ladite cavité interne (30) selon le mouvement de compression de la roue (14) et pour se déplacer vers l'extérieur de ladite cavité (30) selon le mouvement de rebond de la roue (14) ;
un piston de cavité (26') couplé avec ladite bielle de déplacement (24) et s'étendant jusqu'audit tube hydraulique (22'), séparant ainsi ladite cavité interne (30) en une première section (32) et une deuxième section (34), ledit piston de cavité (26') définissant un premier orifice (36) adapté pour permettre le flot dudit fluide compressible (20) entre ladite première section (32) et ladite deuxième section (34) de ladite cavité interne (22') ; et
un premier diaphragme de réduction variable ou à étranglement (28) couplé avec ledit piston de cavité (26') et adapté pour adapter le passage dudit fluide compressible (20) au travers dudit orifice (36) de manière variable, en fonction de la vélocité dudit piston de cavité (26') par rapport audit tube hydraulique (22'), ledit piston de cavité (26'), ledit premier orifice (36) et ledit premier diaphragme de réduction variable (28) coopérant pour fournir une force d'amortissement de rebond pendant le mouvement de rebond de la roue (14) ;
une cuve sous pression (48) définissant une cavité externe (50) disposée entre ladite cuve sous pression et ledit tube hydraulique (22') et adaptée pour contenir une portion dudit fluide compressible (20), dans laquelle ledit tube hydraulique (22') définit une ouverture de tube (52) adaptée pour coupler ladite première section (32) de ladite première cavité (30) avec ladite cavité extérieure (50) de manière fluide, et dans laquelle ladite cuve sous pression (48) et ladite ouverture de tube (52) coopèrent avec ledit tube hydraulique (22') et ledit fluide compressible (20) pour fournir la force de suspension élastique ;
**caractérisée en ce que** ladite jambe de suspension (10") comprend en outre une soupape à commande (54) adaptée pour restreindre sélectivement le passage dudit fluide compressible (20) au travers de ladite ouverture de tube (52) entre ladite première section (32) de ladite cavité interne (30) et ladite cavité externe (50).

2. Une jambe de suspension (10") selon la revendication 1, dans laquelle ledit fluide compressible comprend un fluide silicone (20).

3. Une jambe de suspension (10") selon la revendication 1, dans laquelle ledit fluide compressible (20) possède une compressibilité plus importante au-delà d'une pression de 2000 livres par pouce carré (13,8 Méga-Pascals) que l'huile hydraulique.

4. Une jambe de suspension (10") selon la revendication 1, dans laquelle ledit fluide compressible (20) est adapté pour se compresser à environ 1,5% de volume sous une pression de 2000 livres par pouce carré (13,8 Méga-Pascals), à environ 3% de volume sous une pression de 5000 livres par pouce carré (34,5 Méga-Pascals) et à environ 6% sous une pression de 10000 livres par pouce carré (69,0 Méga-Pascals).

5. Une jambe de suspension (10") selon l'une quelconque des revendications précédentes, dans laquelle ledit premier diaphragme de réduction variable (28) est une première pile de rondelles d'épaisseur (38).

6. Une jambe de suspension (10") selon l'une quelconque des revendications précédentes, dans laquelle ledit piston de cavité (26) définit un deuxième orifice (40) adapté pour permettre le passage dudit fluide compressible (20) entre ladite première section (32) et ladite deuxième section (34) de ladite cavité intérieure (30).

7. Une jambe de suspension (10") selon la revendication 6, comprenant en outre un deuxième diaphragme de réduction variable (41) couplé avec ledit piston de cavité (26) et adapté pour restreindre le passage dudit fluide compressible (20) au travers dudit deuxième orifice (40) de manière variable, selon la vélocité dudit piston de cavité (26) par rapport audit tube hydrauliques (22').

8. Une jambe de suspension (10") selon la revendication 7, dans laquelle ledit piston de cavité (26), ledit deuxième orifice (40) et ledit deuxième diaphragme de réduction variable (41) coopèrent pour fournir une force d'amortissement de compression pendant le mouvement de compression de la roue (14).

9. Une jambe de suspension (10") selon la revendication 8, dans laquelle ledit deuxième diaphragme de réduction variable (41) est une deuxième pile de rondelles d'épaisseur (42).

10. Une jambe de suspension (10") selon l'une quelconque des revendications précédentes, comprenant en outre une unité électrique de commande adaptée pour activer ladite soupape à commande (54) de façon sélective, modulant ainsi activement la force de suspension élastique.

11. Une jambe de suspension (10") selon la revendication 10, dans laquelle ladite unité électrique de commande est en outre adaptée pour déclencher ladite soupape à commande (54) de façon sélective, modulant ainsi activement la force d'amortissement de rebond.

12. Une jambe de suspension (10") selon la revendication 10, dans laquelle ladite unité électrique de commande est en outre adaptée pour déclencher ladite soupape à commande (54) de façon sélective, modulant ainsi activement la force d'amortissement de compression.

13. Une jambe de suspension (10") selon l'une quelconque des revendications précédentes, comprenant en outre un mandrin (47A, 47B) adapté pour monter ladite jambe de suspension (10") au véhicule de manière pivotante, sans conformité substantielle.
